# EUROPÄISCHE PATENTSCHRIFT

(11) **EP 2 565 857 B1**
(45) Veröffentlichungstag und Bekanntmachung des Hinweises auf die Patenterteilung: **31.05.2017**
(21) Anmeldenummer: 11179781.7
(22) Anmeldetag: 01.09.2011
(51) Int. Cl.: G08B 13/24, G06K 7/10, H04N 5/225, H04N 5/33, H04N 7/18

(54) **Verfahren und System zur Bewertung der Sicherheitslage in einem Gebäude mit Aufenthaltsbereichen mit Zugangsberechtigung**
Method and system for evaluating the security situation in a building with living areas with access authorisation
Procédé et système d'évaluation de la position de sécurité dans un bâtiment doté de zones d'attente avec autorisation d'accès

(43) Veröffentlichungstag der Anmeldung: 06.03.2013
(73) Patentinhaber: Siemens Schweiz AG, 8047 Zürich (CH)
(72) Erfinder: Hass, Wolfgang, 6300 Zug (CH); Wieser, Dieter, 8700 Küsnacht (CH)
(74) Vertreter: Maier, Daniel Oliver

(56) Entgegenhaltungen:
- WO-A1-2004/068432
- US-A1- 2003 197 612
- ADDLESEE M D ET AL: "THE ORL ACTIVE FLOOR", IEEE PERSONAL COMMUNICATIONS, IEEE COMMUNICATIONS SOCIETY, US, Bd. 4, Nr. 5, 1. Oktober 1997 (1997-10-01) , Seiten 35-41, XP000721304, ISSN: 1070-9916, DOI: 10.1109/98.626980

## Beschreibung

Verfahren und System zur Bewertung der Sicherheitslage in einem Gebäude mit Aufenthaltsbereichen mit Zugangsberechtigung Die Erfindung betrifft ein Verfahren zur Bewertung der Sicherheitslage in einem Gebäude, wobei das Gebäude Aufenthaltsbereiche mit Zugangsberechtigung für berechtigte Personen wie z.B. Büroräume, Forschungs- und Entwicklungsabteilungen, Verbindungsbereiche wie Flure, Treppenhäuser und Aufzüge sowie Ein- und Ausgänge aufweist. Ein solches Gebäude kann mehrere Etagen mit überwachungsbedürftigen Aufenthaltsbereichen aufweisen. Weiterhin betrifft die Erfindung geeignete Anwendungen des erfindungsgemässen Verfahrens.

Aus dem Stand der Technik sind allgemein Verfahren und Systeme zur Gebäudesicherung bekannt, bei welchen die Anwesenheit, das heisst die Präsenz von Personen, z.B. mittels Bewegungsmelder oder mittels Kameras mit nachgeschalteter Bildverarbeitung ermittelt wird, z.B. der US2003/0197612, der US2004/068432, der JP2006099381. Aus der US 2008/0074256 A1 ist ein Überwachungsverfahren und Überwachungssystem bekannt, bei dem die Anzahl von Personen mittels einer Kamera in einem vorbestimmten Bereich erfasst wird. Mittels eines oder mehrere Funkempfangseinheiten wird parallel dazu die Anzahl von Funksendern ermittelt, die von legitimierten Objekten in dem vorbestimmten Bereich, insbesondere von Personen, mitgeführt werden. Ist die Anzahl der von der Kamera erfassten Objekte grösser als die Anzahl der Funksender, so wird die Anwesenheit eines illegalen Objekts, d.h. eines Eindringlings, angenommen.

Aus der IEEE Personal Communication Publikation mit dem Titel "The ORL Active Floor" von Michael D. Addlesee et. al., veröffentlicht im Oktober 1997, XP-000721304, Seite 35 bis 41, ist ein berührungssensitiver Fussboden bekannt, der die Anzahl von Personen fortlaufend ermitteln kann. Auf der Seite 36 ist im Absatz "Applications" offenbart, dass ein derartiges Sicherheitssystem als Zusatz zu einem Tagging System, d.h. zu einem RFID-System, verwendet werden kann.

Aus der DE 10 2007 001 225 A1 ist ferner ein sensitiver Fussboden bekannt, der eine Vielzahl von rasterförmig verlegten Flächenverkleidungselementen aufweist, die ihrerseits mehrere Sensorflächen aufweisen. Die Sensorflächen sind sensitiv auf Druck und zugleich sensitiv auf die Anwesenheit eines elektrisch polarisierbaren Körpers, wie z.B. eines Schuhs, in unmittelbarer Nähe zum Flächenverkleidungselement. Durch Auswerten der jeweiligen Sensorsignale ist die Anzahl von Personen sowie deren Bewegungsrichtung in einem entsprechenden Fussbodenbereich ermittelbar.

Aus dem Stand der Technik sind weiterhin Identifikationsverfahren mit berührungslos arbeitenden Kennungen bekannt. Derartige Kennungen sind z.B. elektronische Ausweise oder "Badges" mit integrierten RFID-Transpondern. Letztere können durch entsprechende RFID-Lesegeräte ausgelesen und datentechnisch zur Sicherheitsüberprüfung auf Zugangsberechtigung an eine Zentrale weitergeleitet werden.

Ausgehend von dem eingangs genannten Stand der Technik ist es eine Aufgabe der Erfindung, ein erweitertes Verfahren und ein erweitertes System zur Bewertung der Sicherheitslage in einem Gebäude mit Aufenthaltsbereichen mit Zugangsberechtigung anzugeben.

Es ist eine weitere Aufgabe der Erfindung, geeignete Anwendungen des erfindungsgemässen Verfahrens anzugeben.

Die Aufgabe der Erfindung wird durch die Gegenstände der unabhängigen Ansprüche gelöst. Vorteilhafte Verfahrensvarianten und Ausführungsformen der vorliegenden Erfindung sind in den abhängigen Ansprüchen angegeben.

Die Aufgabe wird durch ein Verfahren zur Bewertung der Sicherheitslage in einem Gebäude gelöst, wobei das Gebäude Aufenthaltsbereiche mit Zugangsberechtigung für entsprechend berechtigte Personen aufweist. Es wird mittels eines sensorischen Verfahrens automatisiert die aktuelle Anzahl physisch anwesender Personen in zumindest einem Teilbereich der Aufenthaltsbereiche ermittelt. Es werden in dem zumindest einen Teilbereich automatisiert Identifikationskennungen von kontaktlosen, von den jeweiligen berechtigten Personen mitgeführten RFID-Transpondern ausgelesen. Es wird weiterhin die aktuelle Anzahl erfasster Identifikationskennungen ermittelt. Schliesslich wird auf Basis der beiden Anzahlen ein Indikator zur Bewertung der aktuellen Sicherheitslage im Gebäude ausgeben.

Durch die gleichzeitige Erfassung der physischen Anwesenheit von Personen sowie deren Identifikation ist vorteilhaft die Anwesenheit von nichtausgewiesenen Personen oder von Personen mit nicht gültiger Identifikationskennung sowie deren Standort im Gebäude detektierbar und nachverfolgbar. Dabei sind keine gesonderten Zugangsbarrieren wie Drehkreuze, Schleusen und dergleichen mehr erforderlich. Vielmehr ist durch eine nachverfolgende gleichzeitige Erfassung der Personenanwesenheit und ggf. deren Identifikation ein Annähern einer mittels des RFID-Transponders nicht ausgewiesenen Person oder einer Person mit als ungültig erkannten Identifikationskennung an einen Aufenthaltsbereich mit Zugangsberechtigung detektierbar. In einem solchen Fall kann z.B. Sicherheitspersonal an diesen Aufenthaltsbereich mit Zugangsberechtigung hinbeordert werden. Selbiges ist der Fall, wenn eine an sich berechtigte Person mit Zugangsberechtigung für einen Grossteil der Aufenthaltsberechtigung sich einem Aufenthaltsbereich mit besonderer Zugangsberechtigung nähert, für welche diese Person keine gültige Identifikationskennung für den Zugang aufweist.

Die Aufenthaltsbereiche mit Zugangsberechtigung sind insbesondere Büroräume, Forschungs- und Entwicklungsabteilungen, Verbindungsbereiche wie Flure, Treppenhäuser und Aufzüge sowie Ein- und Ausgänge des Gebäudes. Es ist prinzipiell keine durchgehende flächenmässige Überwachung bzw. ein durchgehendes Nachverfolgen der physischen Anwesenheitserfassung der Personen sowie eine durchgehende flächenmässige Erfassung der Identifikationskennungen erforderlich. Es können z.B. auch reine Verbindungsgänge, Treppenhäuser oder Betriebsräume ohne zusätzliche weitere Ein- und Ausgänge ausgespart bleiben. Selbiges trifft auf Aufenthaltsbereiche zu, die generell keine Zugangsberechtigung erfordern, wie z.B. Foyers, Kantinen oder Warteräume. Somit kann ein Gebäude sich flickenteppichartig aus Aufenthaltsbereichen mit Zugangsberechtigung und Aufenthaltsbereichen ohne erforderliche Zugangsberechtigung zusammensetzen. Auch ist es vorstellbar, dass bei den Aufenthaltsbereichen mit Zugangsberechtigung nur die Identifikationskennungen erfasst werden.

Vorteilhaft ist es besonders, wenn die Aufenthaltsbereiche ohne Zugangsberechtigung zumindest teilweise nur auf die Anwesenheit von Personen und ggf. auf deren Weiterbewegung hin überwacht werden. Dadurch kann sozusagen eine auf physische Anwesenheit erfasste und nachverfolgte Person mit zugeordneter erfasster gültiger Identifikationskennung durch einen Aufenthaltsbereich ohne Zugangsberechtigung mit alleiniger Überwachung auf physischer Anwesenheit hindurch an einen weiteren Aufenthaltsbereich mit Zugangsberechtigung weitergereicht werden. Vorzugsweise wird übergeordnet, wie z.B. etagenweise oder bereichsweise, die Anzahl aller physisch erfassbaren Personen fortlaufend ermittelt. Selbiges gilt für die fortlaufende Ermittlung der Anzahl aller kontaktlos auslesbaren Identifikationskennungen von den RFID-Transpondern.

Mit Sicherheitslage ist in erster Linie der Gefährdungsgrad von Unternehmen, öffentlichen Einrichtungen sowie von Personen oder Personengruppen durch unbefugte Personen gemeint mit dem möglichen Ziel, in den Besitz von vertraulichen oder geheimen Dokumenten, von Unterlagen oder elektronischen Dokumenten und Daten zu gelangen.

Mit der sensorischen Erfassung der aktuellen Anzahl physisch anwesender Personen ist die blosse Erfassung der ganzzahligen

Anzahl von Personen gemeint. Insbesondere ist mit dem sensorischen Verfahren kein biometrisches Verfahren und auch kein im optisch sichtbaren Bereich arbeitendes optisches Bildverarbeitungsverfahren gemeint, welches Rückschlüsse auf die Identität der jeweiligen Personen ermöglicht bzw. ermöglichen könnte.

Mit RFID-Transponder sind insbesondere aktive und passive RFID-Transponder gemeint. Aktive RFID-Transponder senden eine jeweilige im Transponder elektronisch gespeicherte Identifikationskennung (ID) durch Aussenden von elektromagnetischen Wellen aus. Vorzugsweise senden die aktiven RFID-Transponder in einem ISM-Frequenzband, insbesondere im UHF-Frequenzbereich, d.h. im Mikrowellenbereich mit Frequenzen von 300 MHz bis 3 GHz. Bei den passiven RFID-Transpondern kann es sich um induktiv gekoppelt auslesbare RFID-Transponder, wie z.B. im Frequenzbereich von 13,56 MHz, oder um passive UHF-Transponder handeln, welche lediglich die Impedanz der Transponderantenne mit der Identifikationskennung modulieren, ohne selbst elektromagnetische Wellen auszusenden.

RFID-Transponder können z.B. in einem Ausweis im Chipkartenformat, in einem Schlüssel, in einem Etikett oder in einer Uhr integriert sein.

Mit Indikator ist vorzugsweise ein Zahlenwert gemeint, dessen numerischer Wert ein Mass für die vorliegende, bewertete Sicherheitslage ist.

Typischerweise stimmen der Standort einer physisch erfassten Person sowie der Standort eines von der Person mitgeführten, ausgelesenen RFID-Transponders zumindest in etwa überein. Erst für den Fall, dass die Anzahl der physisch erfassten Personen nicht mit der Anzahl der erfassten, ausgelesenen RFID-Transponder übereinstimmt, wird ein geänderter Indikator ausgegeben, welcher eine Verschlechterung der Sicherheitslage anzeigt. Dies ist z.B. dann der Fall, wenn eine Person, wie z.B. ein Besucher, keinen RFID-Transponder oder einen RFID-Transponder mit ungültiger Identifikationskennung mit sich führt. Selbiges ist der Fall, wenn z.B. ein RFID-Transponder liegen geblieben ist. Auch hier stimmt die Zahl der physisch erfassten Personen nicht mit der Anzahl von erfassten Identifikationskennungen überein. Die Änderung dieser Sicherheitslage kann gleichfalls durch einen geänderten Indikator ausgegeben werden.

Der Indikator kann z.B. durch einen übergeordneten Leitstellenrechner ermittelt und z.B. auf einem Display ausgegeben werden, wie z.B. durch Erhöhung einer "Gefährdungszahl" oder durch Änderung der Farbe eines Sicherheitssymbol von grün (für keine Gefährdung) zu rot (für Gefährdung liegt vor).

Nach einer Verfahrensvariante wird als Indikator für die Sicherheitslage fortlaufend die Differenz zwischen den beiden Anzahlen ermittelt. Es wird gegebenenfalls eine Meldung ausgegeben, wenn die Differenz einen vorgegebenen Vergleichswert übersteigt. Der Vergleichswert kann z.B. den Wert 0, 1, 2 oder 3 aufweisen. Die Meldung kann z.B. eine Email oder eine Textmeldung, wie z.B. eine SMS, oder eine Pagermitteilung sein. Die Differenz ist dabei ein Mass für die Abweichung von physisch anwesenden Personen zu den erfassten Identifikationskennungen. Dabei kann der Indikator mit zunehmender Abweichung bzw. Differenz einen zunehmenden Zahlenwert aufweisen, welcher eine zunehmende Verschlechterung der Sicherheitslage repräsentiert.

Nach einer weiteren Verfahrensvariante wird eine weitere Meldung ausgegeben, wenn die Anzahl der als ungültig erkannten Identifikationskennungen einen vorgegebenen weiteren Vergleichswert übersteigt. Der Vergleichswert kann z.B. den Wert 0, 1, 2 oder 3 aufweisen. In diesem Fall ist zwar eine Identifikationskennung aus einem RFID-Transponder auslesbar, den eine Person mitgeführt. Allerdings stellt eine als ungültig erkannte Identifikationskennung, wie z.B. nach Abgleich mit einem übergeordneten Leitstellenrechner, ein Gefährdungspotential für die Sicherheitslage im Gebäude dar. Die ungültige Identifikationskennung kann z.B. von einem ehemaligen Mitarbeiter stammen, der z.B. zu einem Mitbewerber gewechselt ist und dem folglich keinerlei Zugangsberechtigungen mehr zustehen.

Einer weiteren Verfahrensvariante zufolge wird mittels des sensorischen Verfahrens der jeweilige Standort der physisch anwesenden Personen und/oder der jeweilige Standort der ausgelesenen RFID-Transponder ermittelt und ausgegeben. Die Ausgabe kann z.B. auf einem grafisch nachgebildeten Flurplan des Gebäudes visualisiert werden. Dadurch sind Standortdiskrepanzen zwischen dem Standort physisch anwesender Personen und dem jeweiligen Standort erfasster Identifikationskennungen unmittelbar erkennbar. Visuelle Bewegungen von physisch anwesend erfassten und als solche gekennzeichneten Personen, losgelöst von den Bewegungen erfasster Identifikationskennungen, sind somit ein Indiz für das Vorliegen einer Sicherheitsverletzung bzw. für das Vorliegen einer Verschlechterung der Sicherheitslage. Selbiges trifft zu, wenn visuelle Bewegungen von erfassten und als solche gekennzeichnete Identifikationskennungen losgelöst von den Bewegungen erfasster physisch anwesender Personen sind.

Ein weiterer Vorteil ist, dass auf Basis dieser Standortinformationen eine gezielte Evakuierung des Gebäudes in einem gemeldeten Brandfall möglich ist. Mit anderen Worten ist eine priorisierte Evakuierung von Aufenthaltsbereichen mit hoher Personendichte durch die angeforderten Einsatzkräfte möglich.

Einer besonderen Verfahrensvariante zufolge wird die aktuelle Anzahl physisch anwesender Personen mittels eines auf Druck und/oder auf Annäherung sensitiven ortsauflösenden Fussbodens ermittelt. Der Aufbau und die Funktionsweise eines derartigen Flächenverkleidungselementes ist eingehend aus der in der Beschreibungseinleitung genannten deutschen Offenlegungsschrift DE 10 2007 001 225 A1 bekannt.

Auf Basis derartiger matrixartig nebeneinander angeordneter bzw. verlegter Flächenverkleidungselemente, welche jeweils eine Mehrzahl von Sensorflächen aufweist, ist ein auf Annäherung und/oder auf Berührung sensitiver ortsauflösender Fussboden realisierbar. Jedes der Flächenverkleidungselemente weist dort ein Elektronikmodul zur Druck- und Annäherungserfassung auf, wobei jedes Elektronikmodul zum Datenaustausch und zur Energieversorgung mit benachbarten Elektronikmodulen, soweit angrenzend vorhanden, elektrisch verbunden ist. Der Fussboden kann z.B. als Teppichboden, als Parkettboden oder als Steinboden realisiert sein. Wird ein Aufenthaltsbereich mit oder ohne Zugangsberechtigung mit einem derartigen sensitiven Fussboden verlegt, zumindest für die Hauptdurchgangsbereiche, so ist eine durchgehende physische Erfassung der Anzahl von darüber hinweg laufenden Personen sowie deren Weiterbewegungsrichtung mittels bekannter rechnergestützten Auswertemitteln ermittelbar. Dabei werden die von einem solchen sensitiven Fussboden erfassten Druckbelastungen und Annäherungen dezentral durch die Elektronikmodule erfasst und zentral an eine Verarbeitungseinheit, wie z.B. an eine Auswerteeinheit, weitergeleitet. Mittels geeigneter Auswertesoftware ist dann die aktuelle Anzahl der physisch anwesenden Personen in Bezug auf einen solchen sensitiven Fussboden ermittelbar.

Alternativ oder zusätzlich können eine Vielzahl von aktuellen Anzahlen zu einer Gesamtanzahl von physisch anwesenden Personen aufsummiert werden. In diesem Fall können die jeweiligen Auswerteinheiten datentechnisch miteinander verbunden sein, wie z.B. über Funk oder leitungsgebunden.

Weiterhin können die RFID-Transponder über im Fussboden verteilt angeordnete RFID-Lesegeräte ausgelesen werden. Es wird dann übergeordnet die aktuelle Anzahl der erfassten Identifikationskennungen ermittelt. Vorzugsweise sind die RFID-Transponder aktiv sendende UHF-Transponder, wie z.B. im Chipkartenformat. Durch einen übergeordneten Auswerterechner bzw. durch eine übergeordnete Zentrale können dann die erfassten Anzahlen für Personen und Identifikationen ausgewertet werden. Bei dieser Verfahrensvariante bzw. bei einem solchen System ist vorteilhaft sowohl die physische Anwesenheit als auch eine Identifikation dieser Personen über den jeweils mitgeführten RFID-Transponder durch einen derartigen Fussboden für sich alleine möglich.

Vorzugsweise weisen die jeweiligen Elektronikmodule ein derartiges RFID-Lesegerät auf. Diese Lesegeräte sind dazu eingerichtet, die von den jeweiligen RFID-Transpondern ausgesendeten Identifikationskennungen zu empfangen und ggf. über die benachbarten Elektronikmodule an die Auswerteeinheit für den sensitiven Fussboden weiterzuleiten. Dabei ist es ausreichend, wenn nur ein Teil der Elektronikmodule für die Auswertung der Druck- und Annäherungsinformationen ein derartiges RFID-Lesegerät aufweist. Besonders vorteilhaft ist es, wenn die Elektronikmodule einen kapazitiv wirkenden Annäherungssensor auf dem Prinzip des offenen Kondensators aufweisen, wie in der deutschen Offenlegungsschrift DE 10 2007 001 225 A1 offenbart, wobei der kapazitive Annäherungssensor sowie deren Ansteuerschaltung zugleich zum Empfang der Identifikationskennungen eingerichtet ist. Hierzu kann ein solcher Annäherungssensor in einer ersten zeitlichen Phase einen Annäherung detektieren und in einer zweiten zeitlichen Phase auf Empfang nach einer gesendeten Identifikationskennung schalten.

Einer weiteren Verfahrensvariante bzw. Systemvariante zufolge wird die aktuelle Anzahl physisch anwesender Personen mittels eines auf Druck und/oder auf Annäherung sensitiven ortsauflösenden Fussbodens ermittelt. Im Gegensatz zur vorherigen Verfahrensvariante werden die RFID-Transponder über darüberliegende, in einem Deckenbereich verteilt angeordnete und/oder im angrenzenden Wandbereich entlang verteilt angeordnete RFID-Lesegeräte ausgelesen. Es wird dann übergeordnet die aktuelle Anzahl der erfassten Identifikationskennungen ermittelt. Die RFID-Lesegeräte können z.B. entlang einer Reihe punktförmig verlegt sein. Sie können über ein gemeinsames Buskabel zur Weiterleitung der erfassten Identifikationskennungen an eine gemeinsame Zentrale angeschlossen sein. Die Weiterleitung der erfassten Identifikationskennungen kann alternativ zumindest mittelbar über Funk an die gemeinsame Zentrale erfolgen.

Alternativ kann jedes Flächenverkleidungselement ein Elektronikmodul zur Druck- und Annäherungserfassung aufweisen, ohne datentechnisch mit benachbarten Elektronikmodulen verbunden zu sein. Die Elektronikmodule sind dabei an eine gemeinsame Stromversorgung angeschlossen. Weiterhin weisen die Elektronikmodule eine Sendeeinheit zum Senden der erfassten Druck- und/oder Annäherungsdaten an die im Decken- oder Wandbereich verlegten RFID-Lesegeräte.

Das erfindungsgemässe Verfahren ist vorteilhaft zum Detektieren und Lokalisieren von Personen mit fehlender oder nicht auslesbarer Identifikationskennung anwendbar. Dadurch wird die Sicherheitslage in einem Gebäude deutlich verbessert.

Das erfindungsgemässe Verfahren ist vorteilhaft auch zum Detektieren und Lokalisieren von kontaktlos ausgelesenen RFID-Transpondern mit ungültiger Identifikationskennung anwendbar. Auch dadurch wird die Sicherheitslage in einem Gebäude deutlich verbessert.

Schliesslich wird die Aufgabe der Erfindung durch ein zum erfindungsgemässen System zur Bewertung der Sicherheitslage in einem Gebäude gelöst, wobei das Gebäude Aufenthaltsbereiche mit Zugangsberechtigung für entsprechend berechtigte Personen aufweist. Das System weist zum Verfahren korrespondierende sensorische Mittel zur automatisierten Ermittlung der aktuellen Anzahl physisch anwesender Personen in zumindest einem Teilbereich der Aufenthaltsbereiche auf. Weiterhin weist das System zum Verfahren korrespondierende Mittel zum automatisierten Auslesen kontaktlos auslesbarer, von den jeweiligen berechtigten Personen mitgeführter RFID-Transponder in dem zumindest einen Teilbereich sowie zum Verfahren korrespondierende Mittel zur Ermittlung der aktuellen Anzahl erfasster Identifikationskennungen auf.

Schliesslich weist das System Mittel zur Bildung und Ausgabe eines Indikators auf Basis der beiden Anzahlen zur Bewertung der aktuellen Sicherheitslage im Gebäude auf.

Die Erfindung sowie vorteilhafte Ausführungen der vorliegenden Erfindung werden am Beispiel der nachfolgenden Figuren erläutert. Dabei zeigen:
- FIG 1: ein Ablaufdiagramm für das Prinzip des Verfahrens,
- FIG 2: eine Draufsicht auf einen sensitiven Fussboden mit möglicher kontaktloser Identifikation von Personen in einem Aufenthaltsbereich eines Gebäudes gemäss einer ersten Variante der Erfindung, und
- FIG 3: ein Beispiel für eine zweite Variante gemäss der Erfindung mit sensitivem Fussboden und einer verteilten Anordnung von RFID-Lesegeräten im Deckenbereich eines Aufenthaltsbereichs eines Gebäudes.

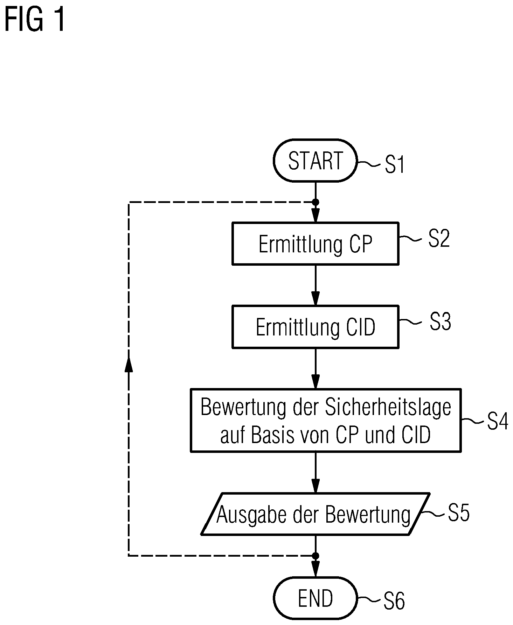

FIG 1 zeigt ein Ablaufdiagramm für das Prinzip des Verfahrens.

Mit dem Bezugszeichen S1 ist ein Startschritt für die Bewertung der Sicherheitslage in einem Gebäude bezeichnet, wobei ein solches Gebäude Aufenthaltsbereiche mit Zugangsberechtigung für entsprechend berechtigte Personen aufweist.

Im Schritt S2 wird mittels eines sensorischen Verfahrens automatisiert die aktuelle Anzahl CP physisch anwesender Personen in zumindest einem Teilbereich der Aufenthaltsbereiche ermittelt.

Im folgenden Verfahrensschritt S3 werden in dem zumindest einen Teilbereich automatisiert Identifikationskennungen von kontaktlosen, von den jeweiligen berechtigten Personen mitgeführten RFID-Transpondern ausgelesen. Dabei wird die aktuelle Anzahl CID erfasster Identifikationskennungen ermittelt.

Im letzten Schritt S4 wird dann auf Basis der beiden Anzahlen CP, CID ein Indikator zur Bewertung der aktuellen Sicherheitslage im Gebäude ausgeben.

Mit S6 ist der Endschritt des erfindungsgemässen Verfahrens bezeichnet.

Ergänzend wird angemerkt, dass die Reihenfolge der beiden Verfahrensschritte S2, S3 auch umgekehrt sein kann. Die auf den zweiten Schritt S2 zurückgeführte, gestrichelt dargestellte Verzweigung soll verdeutlichen, dass die Schritte S2 bis S5 fortlaufend wiederholt werden können, um immer aktuell die Sicherheitslage bewerten zu können.

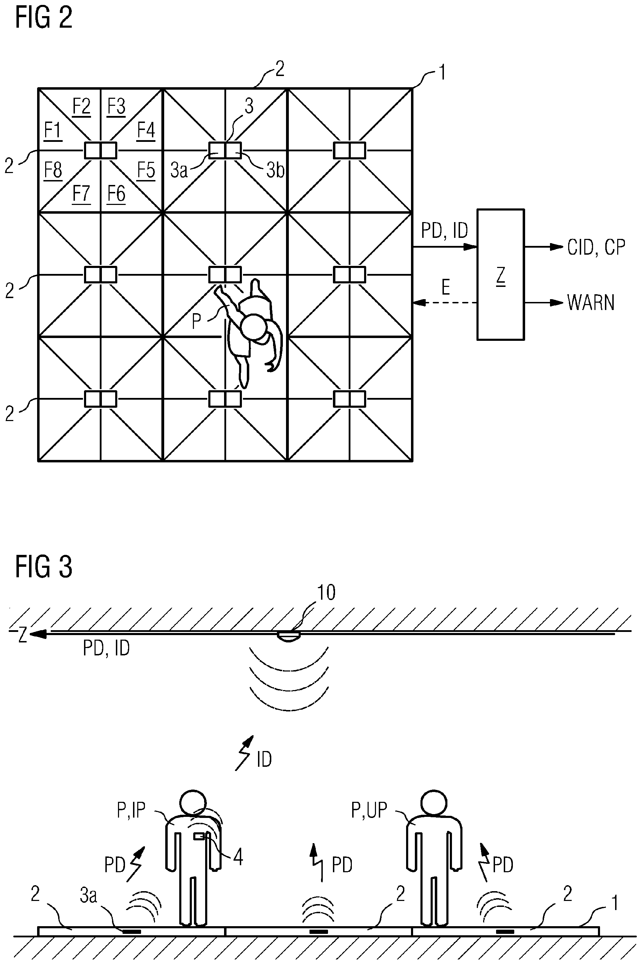

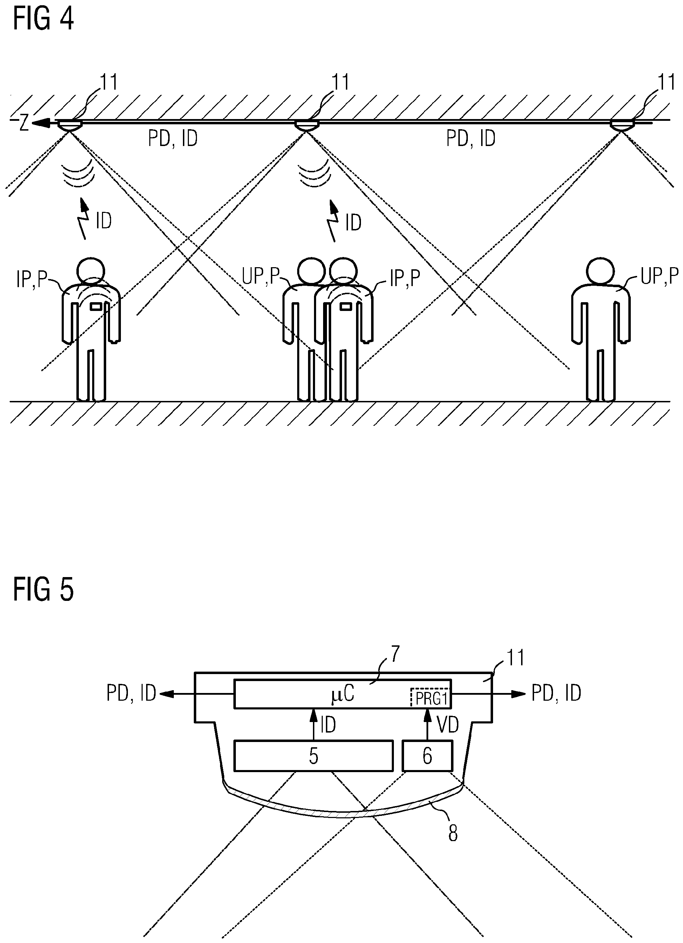

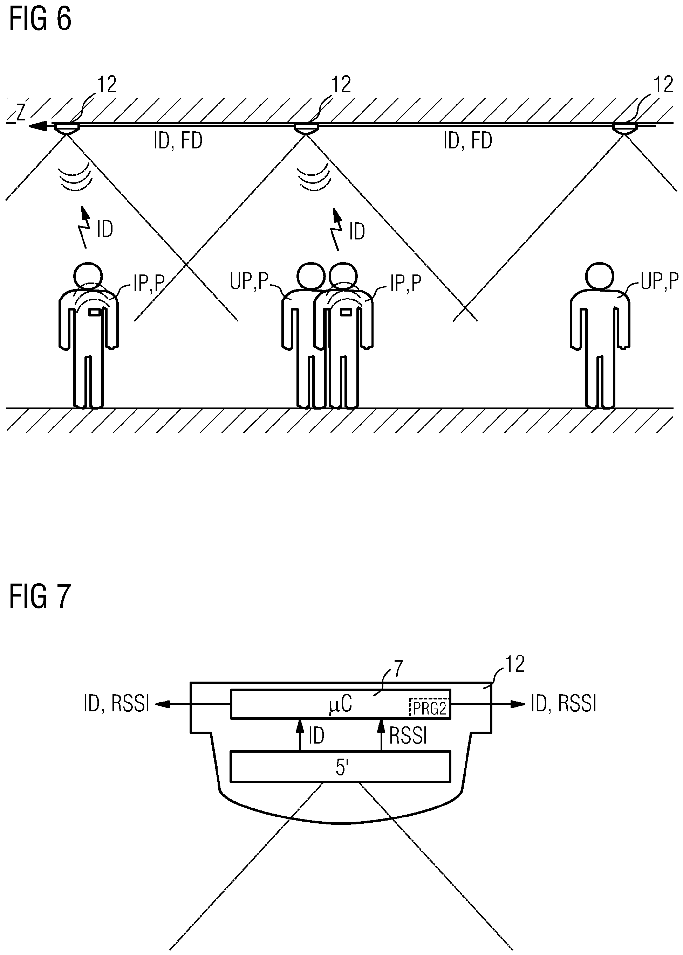

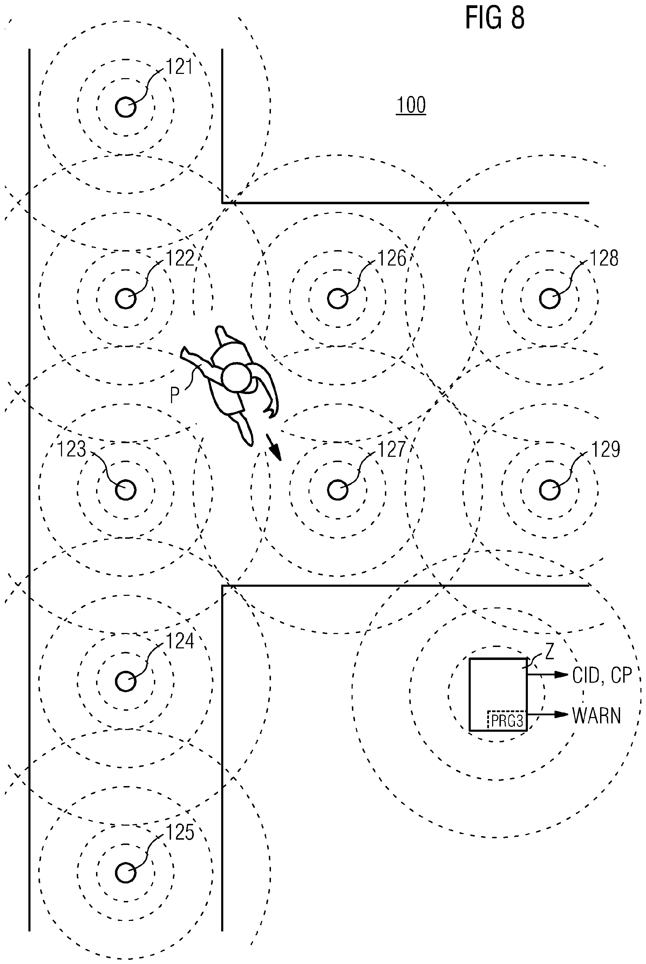

FIG 2 zeigt eine Draufsicht auf einen sensitiven Fussboden 1 mit möglicher kontaktloser Identifikation von Personen P in einem nicht weiter bezeichneten Aufenthaltsbereich eines Gebäudes gemäss einer ersten Variante der Erfindung. Der Fussboden 1 kann dabei Teil eines zu überwachenden Aufenthaltsbereichs sein oder der Aufenthaltsbereich selbst sein.

In der FIG 2 ist dargestellt, wie sich in der Bilddarstellung eine Person P von oben nach unten bewegt. Dabei überschreitet diese Person P mehrere nebeneinander angeordnete, auf Druck und/oder auf Annäherung sensitive ortsauflösende Flächenverkleidungselemente 2. Jedes der neun gezeigten Flächenverkleidungselemente 2, welches jeweils acht Sensorflächen F1-F8 aufweist, weist im jeweiligen Zentrum eines solchen Flächenverkleidungselementes 2 ein Elektronikmodul 3a zur Druckerfassung und gegebenenfalls zur kapazitiven Annäherungserfassung, wie in der deutschen Offenlegungsschrift DE 10 2007 001 225 A1 beschrieben, auf.

Erfindungsgemäss ist zugleich im jeweiligen Zentrum eines solchen Flächenverkleidungselementes 2 ein RFID-Lesegerät 3b vorhanden, welches zum Auslesen einer Identifikationskennung ID eines möglicherweise sich in der Nähe befindlichen RFID-Transponders angeordnet ist. Typischerweise ist ein solcher RFID-Transponder in einem chipkartenförmigen Ausweis, wie z.B. in einem Firmenausweis, integriert, den typischerweise eine jeweilige Person P zu ihrer Identifikation innerhalb des Gebäudes mitzuführen hat. Besonders vorteilhaft ist es, wenn es sich bei dem RFID-Transponder um einen aktiv sendenden RFID-Transponder handelt, vorzugsweise um einen im UHF-Frequenzbereich arbeitenden RFID-Transponder, wie z.B. in einem ISM-Frequenzband um 433 MHz, 866 MHz, 902 MHz, 245 GHz oder 5,8 GHz.

Sowohl die Elektronikmodule 3a wie auch die RFID-Lesegeräte 3b sind mit benachbarten Einheiten 3a, 3b, soweit angrenzend vorhanden, zum Datenaustausch elektrisch verbunden. Zur Energieversorgung können diese Einheiten an eine gemeinsame Stromversorgung angeschlossen sein. Im Beispiel der FIG 2 erfolgt die Energieversorgung E über eine ausserhalb des Fussbodens 1 angeordnete Zentrale Z. Diese kann z.B. ein zentraler Auswerte- oder Leitrechner sein. Vorzugsweise sind jeweils ein Elektronikmodul 3a und jeweils ein RFID-Lesegerät 3b in einer Baueinheit 3 zusammengefasst. Weiterhin sind diese Baueinheiten 3 dazu eingerichtet, die jeweils erfassten Druck- und/oder Annäherungsdaten PD sowie gegebenenfalls erfasste Identifikationsdaten ID an angrenzende Baueinheiten 3 weiterzuleiten und von benachbarten anderen Baueinheiten 3 empfangene Druck- und/oder Annäherungsdaten PD sowie erfasste Identifikationsdaten ID im Sinne eines Routers an die Zentrale Z weiterzuleiten. Weiterhin ist die Zentrale Z mittels eines geeigneten Programms bzw. mittels einer geeigneten Software dazu eingerichtet, aus der Vielzahl der den jeweiligen Flächenverkleidungselementen 2 zugeordneten Druck- und Änderungsdaten PD und der Anzahl empfangener Identifikationskennungen ID eine aktuelle Anzahl CP von physisch anwesenden Personen sowie eine aktuelle Anzahl CID von empfangenen Identifikationskennungen ID zu ermitteln. Die beiden Anzahlen CP, CIP können z.B. auf einem Bildschirm visualisiert werden oder übergeordnet von einer übergeordneten Zentrale zu jeweils einer Gesamtanzahl von physisch anwesenden Personen und zu einer Gesamtanzahl von empfangenen Identifikationskennungen ID aufsummiert werden.

Insbesondere ist die Zentrale Z dazu eingerichtet, als Indikator für die aktuelle Sicherheitslage fortlaufend die Differenz zwischen den beiden Anzahlen CP, CID zu ermitteln. Die Zentrale Z kann auch dazu eingerichtet sein, eine Meldung WARN auszugeben, wenn die Differenz einen vorgegebenen Vergleichswert, wie z.B. den Wert 0, übersteigt. Die Meldung WARN kann als Warnmeldung zum Beispiel auch auf ein Mobiltelefon eines Wachmanns übertragen werden. Sie kann auch eine weitere Meldung ausgeben, wenn die Anzahl der als ungültig erkannten Identifikationskennungen ID einen vorgegebenen weiteren Vergleichswert, wie z.B. den Wert 0, übersteigt. Weiterhin kann die Zentrale Z sowie die übergeordnete Zentrale dazu eingerichtet sein, den jeweiligen Standort der physisch anwesenden Personen P und/oder den jeweiligen Standort der ausgelesenen RFID-Transponder 4 bzw. Identifikationskennungen ID zu ermitteln und z.B. auf einem Flurplan des Gebäudes zu visualisieren.

FIG 3 zeigt ein Beispiel für eine zweite Variante gemäss der Erfindung mit sensitivem Fussboden 1 und einer verteilten Anordnung von RFID-Lesegeräten 10 im Deckenbereich eines Aufenthaltsbereichs eines Gebäudes. Im Vergleich zur vorherigen Variante weisen die matrixartig angeordneten Flächenverkleidungselemente 2 des Fussbodens 1 je ein Elektronikmodul 3a zur Druck- und/oder Annäherungserfassung auf, ohne datentechnisch mit benachbarten Elektronikmodulen 3a verbunden zu sein. Die Elektronikmodule 3a sind an eine gemeinsame, nicht weiter gezeigte Stromversorgung angeschlossen. Weiterhin weisen die Elektronikmodule 3a eine aktive Sendeeinheit zum Senden der erfassten Druck- und Annäherungsdaten PD an die im Decken- oder Wandbereich verlegten RFID-Lesegeräte 10 auf.

Die Sendeinheiten sind dabei funk- und datentechnisch an die Empfangseigenschaften der RFID-Lesegeräte 10 angepasst. Besonders vorteilhaft ist es, wenn die Elektronikmodule 3a einen kapazitiv wirkenden Annäherungssensor auf dem Prinzip des offenen Kondensators aufweisen (siehe dazu die deutsche Offenlegungsschrift DE 10 2007 001 225 A1 in der Beschreibungseinleitung). Dabei können der kapazitive Annäherungssensor sowie deren Ansteuerschaltung zugleich zum Senden der erfassten Druck- und Annäherungsdaten PD eingerichtet sein. Hierzu kann ein solcher Annäherungssensor in einer ersten zeitlichen Phase eine Annäherung detektieren und in einer zweiten zeitlichen Phase die Druck- und Annäherungsdaten PD aussenden.

Im vorliegenden Beispiel ist nur ein RFID-Lesegerät 10 gezeigt, welches an die Gehäuseform eines Brandmelders angelehnt ist. Typischerweise sind dann mehrere derartiger RFID-Lesegeräte 10 hintereinander beabstandet angeordnet und über eine gemeinsame Busleitung angeschaltet. An einem Ende der Busleitung ist vorzugsweise eine Zentrale Z zur übergeordneten Auswertung der erfassten Identifikationskennungen ID und der jeweiligen erfassten Druck- und Annäherungsdaten PD, wie im vorherigen Beispiel beschrieben, angeschlossen. Dabei stammt im Beispiel der FIG 3 empfangene Identifikationskennung ID von einem RFID-Transponder 4, der in einen chipkartenartigen Ausweis integriert ist und von der symbolisch dargestellten Person P getragen wird.

## Patentansprüche

1. Verfahren zur Bewertung der Sicherheitslage in einem Gebäude (100), wobei das Gebäude (100) Aufenthaltsbereiche mit Zugangsberechtigung für entsprechend berechtigte Personen (IP) aufweist, wobei mittels eines auf Druck und/oder auf Annäherung sensitiven ortsauflösenden Fussbodens (1) automatisiert die aktuelle Anzahl (CP) physisch anwesender Personen (P) in zumindest einem Teilbereich der Aufenthaltsbereiche ermittelt wird, wobei in dem zumindest einen Teilbereich automatisiert Identifikationskennungen (ID) von kontaktlosen, von den jeweiligen berechtigten Personen (IP) mitgeführten RFID-Transpondern (4) über im Fussboden (1) verteilt angeordnete RFID-Lesegeräte (3b) ausgelesen werden und wobei die aktuelle Anzahl (CID) erfasster Identifikationskennungen (ID) ermittelt wird, und wobei dann auf Basis der beiden Anzahlen (CP, CID) ein Indikator zur Bewertung der aktuellen Sicherheitslage im Gebäude (100) ausgeben wird.

2. Verfahren nach Anspruch 1, wobei die RFID-Transponder (4) anstelle von über im Fussboden (1) verteilt angeordnete RFID-Lesegeräte (3b) über darüberliegende, in einem Deckenbereich verteilt angeordnete und/oder im angrenzenden Wandbereich entlang verteilt angeordnete RFID-Lesegeräte (5) ausgelesen werden.

3. Verfahren nach Anspruch 1 oder 2, wobei als Indikator für die Sicherheitslage fortlaufend die Differenz zwischen den beiden Anzahlen (CP, CID) ermittelt wird und wobei gegebenenfalls eine Meldung (WARN) ausgegeben wird, wenn die Differenz einen vorgegebenen Vergleichswert übersteigt.

4. Verfahren nach Anspruch 3, wobei eine weitere Meldung ausgegeben wird, wenn die Anzahl der als ungültig erkannten Identifikationskennungen (ID) einen vorgegebenen weiteren Vergleichswert übersteigt.

5. Verfahren nach Anspruch 3 oder 4, wobei der jeweilige Standort der physisch anwesenden Personen (CP) und/oder der jeweilige Standort der ausgelesenen RFID-Transponder (4) ermittelt und ausgegeben wird.

6. Verfahren nach einem der vorherigen Ansprüche, wobei die Aufenthaltsbereiche insbesondere Büroräume, Forschungs- und Entwicklungsabteilungen, Verbindungsbereiche wie Flure, Treppenhäuser und Aufzüge sowie Ein- und Ausgänge des Gebäudes (100) sind.

7. Anwendung des Verfahrens nach einem der vorherigen Ansprüche 1 bis 6 zum Detektieren und Lokalisieren von Personen (P) mit fehlender oder nicht auslesbarer Identifikationskennung (ID).

8. Anwendung des Verfahrens nach einem der vorherigen Ansprüche 1 bis 6 zum Detektieren und Lokalisieren von kontaktlos ausgelesenen RFID-Transpondern (4) mit ungültiger Identifikationskennung (ID).

9. System zur Bewertung der Sicherheitslage in einem Gebäude (100), wobei das Gebäude (100) Aufenthaltsbereiche mit Zugangsberechtigung für entsprechend berechtigte Personen (IP) aufweist,
- wobei das System einen auf Druck und/oder auf Annäherung sensitiven ortsauflösenden Fussbodens (1) zur automatisierten Ermittlung der aktuellen Anzahl (CP) physisch anwesender Personen (P) in zumindest einem Teilbereich der Aufenthaltsbereiche aufweist,
- wobei das System im Fussboden (1) verteilt angeordnete RFID-Lesegeräte (3b) oder darüberliegende, in einem Deckenbereich verteilt angeordnete und/oder im angrenzenden Wandbereich entlang verteilt angeordnete RFID-Lesegeräte (5) zum automatisierten Auslesen kontaktlos auslesbarer, von den jeweiligen berechtigten Personen (IP) mitgeführter RFID-Transponder (4) in dem zumindest einen Teilbereich sowie Mittel zur Ermittlung der aktuellen Anzahl (CID) erfasster Identifikationskennungen (ID) aufweist, und
- wobei das System Mittel zur Ausgabe eines Indikators auf Basis der beiden Anzahlen (CP, CID) zur Bewertung der aktuellen Sicherheitslage im Gebäude (100) aufweist.

## Claims

1. Method for evaluating the security situation in a building (100), wherein the building (100) has common areas with access authorisation for appropriately authorised persons (IP), wherein the current number (CP) of persons (P) physically present in at least one sub-area of the common areas is automatically determined by means of a spatially resolving floor (1) which is sensitive to pressure and/or to approach, wherein in the at least one sub-area identifiers (ID) are automatically read by contactless RFID transponders (4) carried by the respective authorised persons (IP) via RFID readers (3b) arranged distributed in the floor (1) and wherein the current number (CID) of recognized identifiers (ID) is determined, and wherein an indicator for evaluating the current security situation in the building (100) is then output on the basis of the two numbers (CP, CID).

2. Method according to claim 1, wherein the RFID transponders (4) are read by RFID readers (5) arranged distributed thereabove in a ceiling area and/or distributed along the adjoining wall area instead of by RFID readers (3b) arranged distributed in the floor (1).

3. Method according to claim 1 or 2, wherein as an indicator of the security situation the difference between the two numbers (CP, CID) is continuously determined, and wherein where appropriate a message (WARN) is output if the difference exceeds a predetermined comparison value.

4. Method according to claim 3, wherein a further message is output if the number of invalid detected identifiers (ID) exceeds a predetermined further comparison value.

5. Method according to claim 3 or 4, wherein the respective location of the physically present persons (CP) and/or the respective location of the read-out RFID transponders (4) is determined and output.

6. Method according to one of the preceding claims, wherein the common areas are in particular offices, research and development departments, connecting areas such as hallways, stairwells and lifts as well as entrances and exits of the building (100).

7. Use of the method according to one of the preceding claims 1 to 6 for detecting and locating persons (P) with a missing or unreadable identifier (ID).

8. Use of the method according to one of the preceding claims 1 to 6 for detecting and locating contactlessly read-out RFID transponders (4) with an invalid identifier (ID).

9. System for evaluating the security situation in a building (100), wherein the building (100) has common areas with access authorisation for appropriately authorised persons (IP),
- wherein the system has a spatially resolving floor (1) which is sensitive to pressure and/or to approach for automatically determining the current number (CP) of persons (P) physically present in at least one sub-area of the common areas,
- wherein the system has RFID readers (3b) arranged distributed in the floor (1) or RFID readers (5) arranged distributed thereabove in a ceiling area and/or distributed along the adjoining wall area for automatically reading contactlessly readable RFID transponders (4) carried by the respective authorised persons (IP) in the at least one sub-area, as well as means for determining the current number (CID) of recognised identifiers (ID), and
- wherein the systems has means for outputting an indicator on the basis of the two numbers (CP, CID) for evaluating the current security situation in the building (100).

## Revendications

1. Procédé d'évaluation de la position de sécurité dans un bâtiment (100), le bâtiment (100) comportant des zones de séjour avec autorisation d'accès pour des personnes autorisées (IP), le nombre actuel (CP) de personnes physiquement présentes (P) étant déterminé automatiquement au moyen d'un sol (1) à résolution locale sensible à la pression et/ou au rapprochement dans au moins une zone partielle des zones de séjour, des identifiants (ID) de transpondeurs RFID (4) sans contact portés par les personnes respectivement autorisées (IP) étant lus automatiquement dans l'au moins une zone partielle par l'intermédiaire de lecteurs RFID (3b) répartis dans le sol (1) et le nombre actuel (CID) d'identifiants détectés étant déterminé, et un indicateur pour évaluer la position de sécurité actuelle dans le bâtiment (100) étant émis sur la base des deux nombres (CP, CID).

2. Procédé selon la revendication 1, les transpondeurs RFID (4) étant lus non pas par des lecteurs RFID (3b) répartis dans le sol (1), mais par des lecteurs RFID (5) répartis au-dessus dans une zone de plafond et/ou dans la zone de paroi adjacente.

3. Procédé selon la revendication 1 ou 2, la différence entre les deux nombres (CP, CID) étant déterminée en continu en tant qu'indicateur de la position de sécurité et, le cas échéant, un message (WARN) étant émis lorsque la différence dépasse une valeur de comparaison prédéterminée.

4. Procédé selon la revendication 3, un autre message étant émis lorsque le nombre d'identifiants (ID) reconnus non valides dépasse une autre valeur de comparaison prédéterminée.

5. Procédé selon la revendication 3 ou 4, l'emplacement respectif des personnes physiquement présentes (CP) et/ou l'emplacement respectif des transpondeurs RFID lus (4) étant déterminés et émis.

6. Procédé selon l'une des revendications précédentes, les zones de séjour étant plus particulièrement de bureaux, des départements de recherche et de développement, des zones de liaison telles que des couloirs, des cages d'escalier et des ascenseurs ainsi que des entrées et sorties du bâtiment (100).

7. Utilisation du procédé selon l'une des revendications précédentes 1 à 6 pour détecter et localiser des personnes (P) dont l'identifiant (ID) fait défaut ou n'est pas lisible.

8. Utilisation du procédé selon l'une des revendications précédentes 1 à 6 pour détecter et localiser des transpondeurs RFID (4) lus sans contact avec un identifiant non valide (ID).

9. Système d'évaluation de la position de sécurité dans un bâtiment (100), le bâtiment (100) comportant des zones de séjour avec autorisation d'accès pour des personnes autorisées (IP),
- le système comportant un sol (1) à résolution locale sensible à la pression et/ou au rapprochement pour la détermination automatisée du nombre actuel (CP) de personnes physiquement présentes (P) dans au moins une zone partielle des zones de séjour,
- le système comportant des lecteurs RFID (3b) répartis dans le sol (1) ou des lecteurs RFID (5) répartis au-dessus dans une zone de plafond et/ou dans la zone de paroi adjacente pour la lecture automatisée de transpondeurs RFID (4) lisibles sans contact et portés par les personnes respectivement autorisées (IP) dans l'au moins une zone partielle ainsi que des moyens pour déterminer le nombre actuel (CID) d'identifiants (ID) détectés et
- le système comportant des moyens pour émettre un indicateur sur la base des deux nombres (CP, CID) pour évaluer la position de sécurité actuelle dans le bâtiment (100).
